# EUROPÄISCHE PATENTSCHRIFT

(11) **EP 3 286 276 B1**
(45) Veröffentlichungstag und Bekanntmachung des Hinweises auf die Patenterteilung: **07.07.2021**
(21) Anmeldenummer: 16717899.5
(22) Anmeldetag: 18.04.2016
(51) Int. Cl.: C09J 163/00, C08L 23/10, F16B 11/00, C09J 11/08, C09J 5/06

(54) **KLEBSTOFFZUSAMMENSETZUNG MIT VERBESSERTER DELTA-ALPHA-TOLERANZ, DAZUGEHÖRIGES FÜGEVERFAHREN UND ERHÄLTLICHES VERBUNDWERKSTÜCK**
ADHESIVE COMPOSITION HAVING IMPROVED DELTA-ALPHA TOLERANCE, ASSOCIATED JOINING METHOD AND OBTAINABLE COMPOSITE WORKPIECE
COMPOSITION D'ADHÉSIF AYANT UNE TOLÉRANCE DELTA-ALPHA AMÉLIORÉE, PROCÉDÉ D'ASSEMBLAGE ASSOCIÉ ET PIÈCE COMPOSITE POUVANT ÊTRE OBTENUE

(30) Priorität: 20.04.2015 DE 102015207110
(43) Veröffentlichungstag der Anmeldung: 28.02.2018
(73) Patentinhaber: Volkswagen Aktiengesellschaft, 38440 Wolfsburg (DE)
(72) Erfinder: BEHRENDT, Reiner, Nico, 95213 Münchberg (DE)
(86) Internationale Anmeldenummer: PCT/EP2016/058501
(87) Internationale Veröffentlichungsnummer: WO 2016/169874

(56) Entgegenhaltungen:
- WO-A1-2005/100501
- WO-A1-2013/153056
- WO-A1-2014/105244

## Beschreibung

Die Erfindung betrifft eine thermisch aushärtende Klebstoffzusammensetzung, die zum Fügen von Komponenten aus Werkstoffen mit unterschiedlichem Längenausdehnungsverhalten zu einem Verbundwerkstück verwendet werden kann. Ferner betrifft die Erfindung ein Fügeverfahren für Verbundwerkstücke, das unter Verwendung dieser Klebstoffzusammensetzung durchgeführt wird. Schließlich betrifft die Erfindung mittels des Verfahrens erhältliche Verbundwerkstücke.

### Technologischer Hintergrund

Auf vielen Gebieten der Technik werden im zunehmenden Maße Verbundwerkstücke verwendet. Im Kraftfahrzeugbau führt beispielsweise der Einsatz von Verbundwerkstücken in der Regel zu erheblichen Gewichtseinsparungen, ohne dass eine Verschlechterung der mechanischen Eigenschaften in Kauf genommen werden muss. Teils lassen sich die geforderten Eigenschaften nur durch einen Verbund unterschiedlicher Werkstoffe erzielen. Zur Herstellung von Verbundwerkstücken stehen dem Fachmann eine Vielzahl unterschiedlicher Fügeverfahren zur Verfügung. Die vorliegende Erfindung beschränkt sich auf Fügeverfahren, in denen Klebstoffe verwendet werden.

Klebstoffe aus dem Stand der Technik sind beispielsweise in der WO 2013/153056 A1 beschrieben. So bezieht sich diese auf ein Verfahren zum Fügen eines einen Werkstoff aufweisenden Bauteils mit einem, einen weiteren Werkstoff aufweisenden weiteren Bauteil mittels einer Klebstoffschicht. Der Klebstoff kann hierbei eine beliebige zum dauerhaften Verkleben von tragenden Strukturen (Strukturkleber) auf die Bauteile auftragbare Klebstoffmasse aufweisen. Insbesondere handelt es sich bei dem Klebstoff um einen durch Temperatureinwirkung aushärtenden Klebstoff.

Ferner offenbart die WO 2005/100501 A1 gemäß einer Ausführungsform einen Klebstoff, umfassend 1) eine funktionalisierte Komponente und 2) ein Olefinpolymer, umfassend ein Homopolypropylen oder ein Copolymer von Propylen und bis zu 5 Mol-% Ethylen mit a) einer isotaktischen Lauflänge von 1 bis 30, b) einem Prozentwert einer r-Dyade von größer als 20% und c) einer Schmelzwärme von 70 J/g oder weniger, wobei die funktionalisierte Komponente ausgewählt ist aus der Gruppe, bestehend aus funktionalisierten Polymeren, funktionalisierten Oligomeren und β-Nukleierungsmitteln; und wobei sich die Gardner-Farbe des Klebstoffs nicht um mehr als 7 Gardner-Einheiten ändert, wenn der Klebstoff 48 Stunden bei 180°C unter Wärme gealtert wurde, verglichen mit der Gardner-Farbe der ungealterten Zusammensetzung.

Weiterhin bezieht sich die WO 2014/105244 A1 auf Schmelzklebstoffe und deren Anwendungen, wobei die Klebstoffzusammensetzungen insbesondere ein Polymer auf Ethylen-Basis und ein Polymer auf Propylen-Basis mit variierendem Comonomer-Gehalt aufweisen. Als Beispiele für funktionalisierende Komponenten werden auch β-Nukleierungsmittel genannt.

Beim Kleben tritt häufig ein Problem durch Spannungsaufbau in Klebstoffschichten bei Mischbauweisen auf. Im konventionellen Karosseriebau besteht beispielsweise eine häufige Fügeaufgabe darin, Stahl und Aluminium zu kleben. Jedoch führt das unterschiedliche Längenausdehnungsverhalten von Aluminium (Längenausdehnungskoeffizient = 23,8 x 10⁻⁶ 1/K) und Stahl (Längenausdehnungskoeffizient = 12 bis 16 x 10⁻⁶ 1/K) zum Aufbau von Spannungen in der Klebeschicht. Im modernen Mischbau werden ferner Metalle (Alu, Stahl) mit Faserverbundkunststoffen (FVK), insbesondere kohlenstofffaserverstärkte Kunststoffe (CFK), gefügt. Da der Längenausdehnungskoeffizient von CFK bei ca. 0,2 x 10⁻⁶ 1/K liegt, ist besonders das Fügen von CFK mit Aluminium eine große Herausforderung, zumal beispielsweise während des Fügens analog der kathodischen Tauchlackierung (KTL-Prozess) ein großes Temperaturfenster mit teils Spitzentemperaturen von bis zu 195°C durchlaufen wird.

Gerade die Abkühlphase des Prozesses ist dabei als kritisch anzusehen, da sich die Fügepartner hierbei unterschiedlich stark zusammenziehen und der Klebstoff bereits ein dichtes Netzwerk ausgebildet hat, so dass sich als Konsequenz "eingefrorene" Spannungen in der Klebschicht ausbilden. Dieser Effekt wird zusätzlich noch durch den Schrumpf des Klebstoffs (Verringerung des freien Volumens) während der Aushärtung forciert. Die durch die genannten Effekte aufgebauten Spannungen können zur mechanischen Schädigung in Form von Rissbildung innerhalb der Klebschicht (kohäsiver Bruch) oder zur Enthaftung eines Fügepartners von der Klebschicht (adhäsiver Bruch) führen. In jedem Fall ist eine mechanische Schwächung der Klebeschicht zu erwarten, welche sich unter Umständen auch negativ auf die Alterung oder die Funktion des Bauteils (zum Beispiel Crashverhalten) auswirken kann. Die sich aus der unterschiedlichen Längenausdehnung der verschiedenen Materialien ergebende technische Problemstellung wird auch als Delta-Alpha Problematik bezeichnet.

Eine Möglichkeit zur spannungsarmen Verklebung flächiger Werkstücke aus Werkstoffen mit unterschiedlichem Längenausdehnungsverhalten beschreibt beispielsweise DE 40 38 989 A1. Die Delta-Alpha Problematik wird hier schlicht vermieden, in dem das Verkleben bei Temperaturen unter 100°C mit einem UV-aushärtenden Klebstoff erfolgt. Allerdings besitzt die entstehende Klebschicht nur eine begrenze Festigkeit, so dass zum Beispiel der Einsatz in tragenden Karosserie-Bauteilen nicht möglich ist.

Es ist demnach einerseits gewünscht, dass die Klebschicht eine möglichst hohe Festigkeit aufbaut (zum Beispiel durch Verwendung von hochmoduligen Klebstoffen bzw. HochTemperatur-Klebstoffen), andererseits reagieren Klebstoffe mit sehr hohen Festigkeiten zunehmend spröde bzw. bei mechanischer Belastung einer Metall-FVK- oder FVK-FVK-Fügestelle können Delaminationen des Faserverbundwerkstoffs auftreten.

Ein Lösungsansatz für das benannte Problem könnte eine Zähmodifizierung der Klebstoffstoffschicht sein. Die Zähmodifizierung von einzelnen kompakten Bauteilen aus einem polymeren Werkstoff ist bekannt. Hierfür werden vornehmlich Elastomerpartikel in der Duromermatrix fein verteilt, um sich ausbildende Risse durch Rissdissipierung zu stoppen. Es ist somit möglich, durch den Einsatz von elastomermodifizierten Duromeren, neben einer relativ hohen Festigkeit auch eine gewisse Zähigkeit, vor allem bei schlagartiger Beanspruchung, einzustellen. Im Fall von Polystyrol-Bauteilen werden hierzu z. B. Elastomerpartikel im Mikrometerbereich eingesetzt, um sogenanntes High-Impact-Polystyrol (HIPS) zu erzeugen. Bei schlagartiger Beanspruchung dieser Bauteile kommt es durch die Elastomerpartikel zu einer Unterbindung der Rissausbreitung, indem sich aus einzelnen Rissen viele kleine Risse im Elastomerpartikel bilden, welche aber nicht zum Bauteilversagen führen. Der Einsatz elastomermodifizierter Duromere in Klebstoffen ist jedoch in Bezug auf die Einsatztemperaturen stark begrenzt, da sich die Elastomere in Temperaturbereichen von ca. 120 bis 140°C zersetzen. Der Einsatz von Elastomerpartikeln oder -domänen ist daher zum Beispiel aufgrund der relativ hohen Temperaturen im KTL-Prozess von bis zu 195°C nicht möglich.

Der Erfindung liegt daher insbesondere die Aufgabe zugrunde, einen hochfesten Klebstoff bereitzustellen, der eine verbesserte Delta-Alpha Toleranz aufweist.

### Zusammenfassung der Erfindung

Ein oder mehrere der geschilderten Nachteile des Standes der Technik lassen sich unter Zuhilfenahme der erfindungsgemäßen Klebstoffzusammensetzung beheben oder zumindest mindern. Die erfindungsgemäße thermisch aushärtende Klebstoffzusammensetzung zum Fügen von Komponenten aus Werkstoffen mit unterschiedlichem Längenausdehnungsverhalten zu einem Verbundwerkstück zeichnet sich dadurch aus, dass die Klebstoffzusammensetzung Partikel aus β-nukleierungsmittel-haltigem Polypropylen und/oder aus β-nukleiertem Polypropylen enthält und dass die Zusammensetzung
a) 100 Gewichtsteile eines thermisch und duroplastisch aushärtenden Klebstoffs;
b) 0,1 - 95 Gewichtsteile der Partikel; und
c) 0 - 50 Gewichtsteile Hilfs- und Zusatzstoffe
enthält,
wobei der Klebstoff als Basis Epoxid-Harze (EP) aufweist.

Der Erfindung liegt die Erkenntnis zugrunde, dass sich hochfeste Klebstoffschichten mit verbesserter Schadenstoleranz bei Schlag- und/oder Zugbeanspruchung durch Zusatz von Partikeln aus β-nukleierungsmittel-haltigem Polypropylen bzw. aus β-nukleiertem Polypropylen zur Klebstoffzusammensetzung erzeugen lassen.

Die Zähmodifizierung von kompakten Werkstücken aus Polypropylen durch Verwendung von β-Nukleierungsmitteln ist bekannt (S. Henning et al., Macromol. Symp., Vol. 214, pp. 157-171, 2004). Durch den Einsatz dieser β-Nukleierungsmittel werden im Polypropylen β-Sphärolithe erzeugt. Bei Beanspruchung des modifizierten Materials auf Zug schieben sich die β-Kristallite gegeneinander, wodurch sich mikroskopisch kleine Poren bilden (Behrendt et al., J. Appl. Polym. Sci., Vol. 99, pp. 650-658, 2006). Durch die Porenbildung wird die durch die mechanische Beanspruchung erzeugte Energie aufgenommen. Es resultiert somit ein zähes Bruchverhalten, wodurch es zwar zu einer irreversiblen Deformation, aber nicht zu einem spröden Trennbruch kommt. Das zähe Bruchverhalten ist vorteilhafter als der spröde Trennbruch, da der spröde Bruch in der Regel zum vollständigen und augenblicklichem Bauteilversagen führt.

Der Effekt der Zähmodifizierung von Polypropylen bzw. der Bildung von Mikroporen durch β-Nukleierung wurde beispielsweise bei Folien beschrieben (EP 0 865 910 A1). Die β-modifizierten Polypropylen-Materialien (im Folgenden auch kurz β-PP) zeigen im Gegensatz zu den nicht-modifizierten Polypropylen erheblich höhere Dehnbarkeiten, wodurch eine höhere Schadenstoleranz bei Schlag- und/oder Zugbeanspruchung resultiert.

Es hat sich überraschenderweise gezeigt, dass dieser Zähigkeits-Effekt auch im Sinne der Erfindung für den Spannungsabbau innerhalb der sich aushärtenden Klebschicht genutzt werden kann. Hierdurch kann die skizzierte Delta-Alpha-Problematik, das heißt das Problem der unterschiedlichen Längenausdehnung der verschiedenen Materialien, wie zum Beispiel Stahl zu kohlenstofffaserverstärktem Kunststoff, behoben oder zumindest stark gemindert werden.

Die der Klebstoffzusammensetzung zugesetzten Partikel enthalten Partikel aus β-nukleierungsmittel-haltigem Polypropylen und/oder aus β-nukleiertem Polypropylen. Wenn die Klebstoffzusammensetzung, wie nachfolgend noch näher erläutert, im Fügeverfahren soweit aufgeheizt wird, dass die Partikel schmelzen, muss das Partikelmaterial nicht bereits als β-PP vorliegen, sondern entsteht erst beim sich anschließendem Abkühlen des Materials. Bevorzugt ist jedoch der Zusatz von Partikeln, die bereits β-PP, insbesondere homopolymeres β-Polypropylen (β-PP-H) enthalten. Mit anderen Worten, die Klebstoffzusammensetzung enthält β-Polypropylen (β-PP), insbesondere homopolymeres β-Polypropylen (β-PP-H) in Form separater Phasen. Insbesondere liegen dabei 1 bis 95 Gew.-%, vorzugsweise 20 und 65 Gew.- % des kristallinen Polypropylens (bezogen auf das Gesamtgewicht des kristallinen Polypropylens) in β-Kristallitstruktur vor.

Zur Herstellung des Partikelmaterials kann kommerzielles Polypropylen mit β-Nukleierungsmitteln im Konzentrationsbereich von ca. 0,05 bis 1 Gew.-% versetzt und anschließend zu Fasern, Folien oder sonstigen geeigneten Artikeln verarbeitet werden (siehe beispielsweise US 2007/0293609 A1). Wird das Polypropylen dabei mit den Nukleierungsmitteln aufgeschmolzen, entsteht beim Abkühlen die β-kristalline Phase. Als β-Nukleierungsmittel können beispielsweise Bisamide (zum Beispiel N,N-Dicyclohexylnaphthalin-2,6-dicarboxamid), Dicarbonsäuren und deren Salze (zum Beispiel Pimelinsäure, Calciumpimelat, Calciumphthalat, Calciumterephthalat, Calciumsuberat, oder Calciumstearat) und organische Farbpigmente (zum Beispiel γ-Chinacridon) verwendet werden (siehe beispielsweise DE 36 10 644 A1).

Die Partikel liegen vorzugsweise in Form von Plättchen, Granulaten, Pulvern oder Fasern in der Zusammensetzung vor. Die Partikel werden durch Mischen in die Klebstoffzusammensetzung eingebracht und können zuvor zur Verbesserung der Benetzung mit der umgebenden Klebstoff-Matrix oberflächenmodifiziert werden, zum Beispiel durch Vorbehandlung mit einem Hydrophilierungsmittel. Dieses Vorgehen erhöht insbesondere die Benetzung der Partikel aus β-nukleierungsmittel-haltigem Polypropylen bzw. aus β-nukleiertem Polypropylen mit den Epoxid-Harzen.

Bevorzugt liegen die Partikel als Fasern vor (zum Beispiel aus β-PP-H), wie insbesondere in Form von Kurzfasern und Faserhalbzeugen. Kurzfasern haben eine Länge von ca. 1 bis 50 mm. Faserhalbzeuge aus zum Beispiel β-PP oder β-PP-H Fasern umfassen beispielsweise Gewebe, Gelege, Gesticke, Geflechte und Vliesstoffe. Die Fasern können durch Schmelzspinnen, Elektroschmelzspinnen, Schmelzblasen (Meltblown) und Mikrofibrillieren von β-PP-Folien (siehe US 2012/094065 A1) durch biaxiales Verstrecken hergestellt werden (siehe
DE 10 2007 050 047 A1). Die Fasern bzw. Faserhalbzeuge können dem vorgesehenen Klebstoff durch Mischen hinzugesetzt werden.

Die Zusammensetzung enthält:
a) 100 Gewichtsteile eines thermisch und duroplastisch aushärtenden Klebstoffs;
b) 0,1 - 95 Gewichtsteile der Partikeln, bevorzugt 0,1 - 50 Gewichtsteile der Partikel, besonders bevorzugt 1 - 20 Gewichtsteile der Partikel; und
c) 0 - 50 Gewichtsteile Hilfs- und Zusatzstoffe
wobei der Klebstoff als Basis Epoxid-Harze (EP) aufweist.

Unter Klebstoff wird vorliegend ein nichtmetallischer Werkstoff verstanden, der Fügeteile durch Flächenhaftung und innere Festigkeit verbinden kann. Der Klebstoff ist vorzugsweise ein Reaktionsharzklebstoff. Ferner ist der Klebstoff vorzugsweise (zumindest weitgehend) inert gegenüber den Partikeln. Ein besonderer Vorteil des β-PP-Zusatzes liegt darin, dass die Stöchiometrie des Klebstoffs, nämlich das Verhältnis von Härter zu Harz, durch die Inertheit des β-PP nicht beeinflusst wird, und dieses Verhältnis somit nicht angepasst werden muss. Ebenso wird die Aushärtekinetik des Klebstoffs, insbesondere im Hinblick auf die notwendige Aushärtetemperatur und -dauer, durch den Zusatz von Partikeln aus β-nukleierungsmittel-haltigem Polypropylen bzw. aus β-nukleiertem Polypropylen nicht oder allenfalls unerheblich beeinflusst.

Der Reaktionsharzklebstoff enthält als Basis Epoxid-Harze (EP).

Die Klebstoffe auf Basis von Epoxid-Harzen eignen sich aufgrund ihres thermischen Aushärteverhaltens besonders für den Einsatz in einem KTL-Prozess und bilden hochfeste Klebeschichten. Epoxid-Harz-Klebstoffe sind prinzipiell zweikomponentig aus Harz und Härter aufgebaut. Das dem Epoxid-Harz zugrunde liegende Polymer weist terminale Epoxidgruppen auf. Die Herstellung kann zum Beispiel auf Basis von Bisphenol-A und Epichlorhydrin erfolgen. Nach dem Vermischen mit einem Härter bilden sich stabile Duroplasten. Die Aushärtereaktion kann bei Raumtemperatur als auch bei höherer Temperatur vorgenommen werden. Im letzteren Fall werden jedoch üblicherweise höhere Festigkeiten der Klebung erzielt. Da der ausgehärtete Klebstoff eine sehr hohe Festigkeit besitzt, wendet man diese Klebstoff-Klasse häufig für strukturelle Verklebungen zum Beispiel im Fahrzeug- und Flugzeugbau an. Eine Besonderheit sind einkomponentige Epoxidharzklebstoffe, bei denen schon in der Herstellung Harz- und Härterkomponente im korrekten Verhältnis miteinander vermischt wurden. Bei diesen Klebstoffen werden Härter eingesetzt, die bei Raumtemperatur nur sehr langsam reagieren (wie z. B. Dicyandiamid), so dass diese Klebstoffe heiß gehärtet werden müssen. Um die begrenzte Lagerfähigkeit zu erhöhen, können einige dieser Klebstoffe auch tiefgefroren werden.

Hilfs- und Zusatzstoffe umfassen beispielsweise Stabilisatoren und Farbmittel.

Das Verbundwerkstück enthält wenigstens zwei Komponenten aus Werkstoffen mit unterschiedlichem Längenausdehnungsverhalten, wobei die Werkstoffe vorzugsweise umfassen:
a) Metalle, insbesondere Aluminium und Stahl;
b) Kunststoffe; und
c) Mischwerkstoffverbunde mit Polymermatrix, insbesondere Faserverbundkunststoffen (FVK), wie kohlenstofffaserverstärkte Kunststoffe (CFK) oder glasfaserverstärkte Kunststoffe (GFK).

Im Karosseriebau ist der Einsatz von Verbundwerkstücken, die Komponenten aus Faserverbundkunststoffen, wie kohlenstofffaserverstärkte Kunststoffe und metallische Komponenten, insbesondere aus Aluminium und Stahl enthalten, von großer technischer Bedeutung, da sich hierdurch die für die Zweckbestimmung geforderten mechanischen Eigenschaften des zu erstellenden Bauteils bei gleichzeitiger Gewichtsreduktion optimieren lassen. Das Verbundwerkstück umfasst somit besonders bevorzugt eine metallische Komponente (in der Regel aus Stahl oder Aluminium) und eine damit verklebte FVK-Komponente.

Ein weiterer Aspekt der Erfindung betrifft ein Fügeverfahren zur Herstellung eines Verbundwerkstücks, das Komponenten aus Werkstoffen mit unterschiedlichem Längenausdehnungsverhalten enthält. Das Verfahren umfasst die Schritte:
(i) Bereitstellen der zu fügenden Komponenten und gegebenenfalls deren Vorbehandlung;
(ii) Auftragen einer Klebstoffzusammensetzung gemäß der vorliegenden Erfindung auf die vorgegebenen Klebeflächen der zu fügenden Komponenten;
(iii) Aushärten der Klebstoffzusammensetzung durch Erhitzen, derart, dass die in der Zusammensetzung enthaltenen Partikel aus β-nukleierungsmittel-haltigem Polypropylen und/oder aus β-nukleiertem Polypropylen schmelzen und in einer sich anschließenden Abkühlphase eine separate Phase aus β-Polypropylen bilden.

Im Schritt (i) werden demnach die zu verklebenden Teile des zu fertigenden Verbundstücks in für das Verkleben geeigneter Weise bereitgestellt. Dies kann eine Vorbehandlung der einzelnen Komponenten beinhalten, um beispielsweise die Oberfläche zu reinigen, zu trocken oder für die Anbindung zu aktivieren. Ebenso kann der Schritt (i) eine Positionierung der zu verbindenden Komponenten zueinander einschließen, zum Beispiel derart, dass die Klebstoffzusammensetzung im nachfolgenden Schritt (ii) in definierte Freiräume zwischen den beiden Komponenten eingebracht wird, die nach Beendigung des Verfahrens die Klebstoffschicht bilden.

Im Schritt (ii) wird die Kunststoffzusammensetzung auf die vorgesehenen Fügebereiche der zu verbindenden Teile des zu fertigenden Verbundstücks aufgebracht. Die Maßnahme lässt sich in etablierte industrielle Fertigungsprozesse integrieren.

Im Schritt (iii) wird die Klebstoffzusammensetzung zum Aushärten erhitzt und wieder abgekühlt. Die Bedingungen werden so vorgegeben, dass die in der Zusammensetzung enthaltenen Partikel aus β-nukleierungsmittel-haltigem Polypropylen bzw. aus β-nukleiertem Polypropylen schmelzen. Beim Abkühlen entstehen dann in der Klebstoffschicht Phasen aus β-PP. Die Wirkung der in der Zusammensetzung enthaltenen Partikel aus β-nukleierungsmittel-haltigem Polypropylen bzw. aus β-nukleiertem Polypropylen in der Klebstoff-Matrix, d.h. EP-Harz-Matrix, ist wie folgt:
Im Ausgangszustand (ungehärteter Klebstoff) liegen die Partikel als separate Phase in der Klebstoff-Matrix vor. Bei ca. 150°C (entspricht ca. dem Gelpunkt eines EP-Harzes) beginnen die Partikel aus β-nukleierungsmittel-haltigem Polypropylen bzw. aus β-nukleiertem Polypropylen zu schmelzen. Das geschmolzene PP-Material reagiert nicht mit dem Material der Klebstoff-Matrix, dass ebenfalls als separate Phase vorliegt. Während der sich anschließenden Abkühlphase härtet die Klebstoff-Matrix zunehmend aus, gleichzeitig setzt die Kristallisation von β-PP in den von den aufgeschmolzenen Partikeln gebildeten Phasen ein. Sowohl die Klebstoff-Matrix als auch das β-PP verfestigen sich zunehmend in der Abkühlphase. Bei EP-Harz setzt etwa im Bereich der Glastemperatur des EP-Harzes (ca. 124°C) die Kristallisation des β-PP ein. Mit abnehmender Temperatur kann die sich verfestigende Klebstoff-Matrix die durch die thermische Längenänderung der Fügepartner auftretenden Materialspannungen immer schlechter abbauen. Daher wird immer mehr Kraft zum Abbau der Materialspannung in das β-PP-Material eingeleitet, welches zäh reagiert und poröse Strukturen ausbildet, die wiederrum für eine bessere Haftung zwischen Klebstoff-Matrix und β-PP-Material sorgen. Unterhalb der Glastemperatur hätte eine Klebstoff-Matrix ohne β-PP-Phasen keine Möglichkeit, die durch Längenänderung der Fügepartner auftretenden Materialspannungen abzubauen, da die ausgehärtete Klebstoff-Matrix nahezu ausschließlich spröde reagiert und somit die Gefahr des adhäsiven oder kohäsiven Versagens besteht. Bei Anwesenheit von β-PP in der Klebstoff-Matrix können jedoch die durch die Spannungen auftretenden Kräfte in das β-PP eingeleitet werden, welche in beschriebener Weise abgebaut werden.

Vorzugsweise umfasst im Schritt (iii) das thermische Aushärten eine Haltephase, bei der eine Temperatur im Bereich von 170 bis 210°C für eine Dauer von 1 bis 60 min aufrecht erhalten wird. Dies ist insbesondere vorteilhaft, wenn ein EP-Harz verwendet wird

Schließlich ist über das zuvor beschriebene Verfahren ein Verbundwerkstück erhältlich, das einen weiteren Aspekt der Erfindung darstellt.

Zusammenfassend kann festgehalten werden, dass der erfindungsgemäß bereitgestellte Klebstoff eine verbesserte Delta-Alpha-Toleranz zeigt, d.h. ein verbessertes Materialverhalten im Hinblick auf den Abbau von Materialspannungen besitzt, welche aus unterschiedlichen Längenausdehnungen der Fügepartner resultieren. Erfindungsgemäß wurde erkannt, dass die (Delta-Alpha-bedingten) Materialspannungen zunächst aus der Klebstoffmatrix in ein β-PP-Material eingeleitet werden können und durch Mikrovoiding im β-PP-Material abgebaut werden können. Das Mikrovoiding wird allein durch die β-kristalline Kristallitstruktur des PP verursacht.

Erfindungsgemäß wurde ferner erkannt, dass sich das β-PP besonders für die Zähmodifizierung eines EP-Harzes eignet, da das β-PP etwa beim Gelpunkt des EP-Harzes zu schmelzen beginnt, während der Haltephase schmelzflüssig und in separater Phase vorliegt und etwa bei Erreichen der Glastemperatur kristallisiert, um sich ausbildende Materialspannungen sofort aufzunehmen bzw. abzubauen. Die Erfindung betrifft somit eine zähmodifizierte Klebstoffzusammensetzung, bei der einem EP-Harz-Klebstoff thermoplastische PP-Anteile mit β-kristalliner Kristallitstruktur, besonders bevorzugt in Form von β-PP-Fasern, zugesetzt werden.

Weitere bevorzugte Ausgestaltungen der Erfindung ergeben sich aus den übrigen, in den Unteransprüchen genannten Merkmalen sowie der nachfolgenden Beschreibung.

### Kurzbeschreibung der Figuren

Die Erfindung wird nachfolgend in einem Ausführungsbeispiel anhand einer zugehörigen Zeichnung erläutert. Die einzige Figur zeigt:

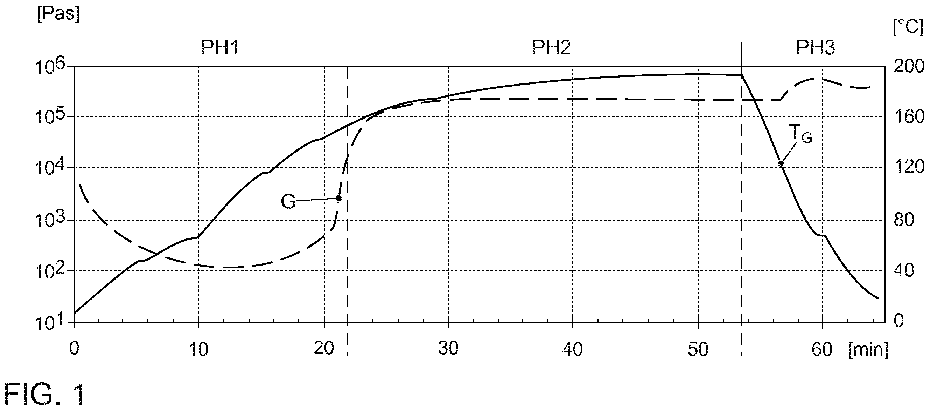

- Figur 1: Den Verlauf der Viskosität eines erfindungsgemäßen Klebstoffs und der Temperatur über die Zeit in einem nach dem KTL-Prozess gestalteten Fügeverfahren.

### Detaillierte Beschreibung der Figur

Figur 1 zeigt den Verlauf der komplexen Viskosität eines erfindungsgemäßen Klebstoffsystems über die Zeit in einem nach dem KTL-Prozess gestalteten exemplarischen Fügeverfahren (gestrichelte Linie). Weiterhin ist der Figur der Verlauf der Temperatur während des KTL-Prozesses zu entnehmen (durchgezogene Linie).

### Die Versuchsbedingungen waren wie folgt:

Als Klebstoffsystem wurde ein kommerziell erhältliches Epoxid-Harz mit einem Wärmeausdehnungskoeffizienten von ca. 40*10⁻⁶ K⁻¹ gewählt. 100 Gewichtsteilen des EP-Harzes wurden 10 Gewichtsteile einer Kurzfaser (Durchmesser im Bereich von 5 bis 50 µm) aus β-PP zugesetzt.

In einer Aufheizphase PH1 wurde die Zusammensetzung erhitzt. Die Vernetzungsreaktion der Klebstoffmatrix wurde thermisch induziert und die Viskosität der Matrix verlief erwartungsgemäß nach dem Einsetzen des Vernetzungsprozesses einen Gelpunkt G. In einer sich anschließenden Haltephase PH2 wurde die Temperatur weitestgehend konstant gehalten. Dargestellt ist die reale KTL-Ofentemperatur in °C, wobei die Vorgabe in dem dargestellten Fall 195°C betrug. Die Temperatur in der Haltephase PH2 lag zu jedem Zeitpunkt oberhalb der Schmelztemperatur von β-PP, sodass die zugesetzten β-PP-Fasern geschmolzen sind und in dem Gemisch als separate Phase vorlagen. Das geschmolzene β-PP reagiert nicht mit dem EP-Harz.

In einer sich anschließenden Abkühlphase PH3 verfestigte sich die Klebstoffmatrix weiter. Mit abnehmender Temperatur bildeten sich bei 160°C zunächst einige Fibrillen in der PP-Schmelze aus, an denen sich bei noch weiter sinkender Temperatur typische β-Sphärolithe (β-PP) ausbilden, das heißt, es bilden sich große kristalline Überstrukturen aus. Anzumerken ist, dass die Parameter wie Kristallisationsgrad (typisch etwa 40 - 60 % bei Polypropylen), Schmelz- und Rekristallisationstemperatur sich in gewissen Grenzen über die Art und die Konzentration des β-Nukleierungsmittels steuern lassen. Das entstehende β-PP zeigt ein zähes/duktiles Bruchverhalten. Bei mechanischer Beanspruchung, zum Beispiel Zugbeanspruchung, kommt es nicht zum Trennbruch, sondern zur Bildung poröser Strukturen (Microvoiding). Während der Abkühlphase PH3 härtet die Klebstoffmatrix zunehmend aus, gleichzeitig setzt die Rekristallisation des β-PP ein. Die Verfestigung der beiden Phasen nimmt mit fortschreitender Abkühlung zu. Etwa im Bereich der Glastemperatur des EP-Harzes (ca. 124°C) setzt die Rekristallisation des β-PP ein. Mit weiter abnehmender Temperatur kann das sich verfestigende EP-Harz die durch die thermische Längenänderung der Fügepartner auftretenden Materialspannungen immer schlechter abbauen. Daher wird immer mehr Kraft zum Abbau der Materialspannung in das β-PP-Material eingeleitet, welches zäh reagiert und poröse Strukturen ausbildet, die wiederrum für eine bessere Haftung zwischen EP-Harz-Matrix und β-PP-Material sorgen. Durch die Anwesenheit von β-PP in der EP-Matrix können jedoch die durch die Spannung auftretenden Kräfte in das β-PP eingeleitet werden, welche in beschriebener Weise abgebaut werden.

### Bezugszeichenliste

- PH1: Aufheizphase
- PH2: Haltephase
- PH3: Abkühlphase
- G: Gelpunkt

## Patentansprüche

1. Thermisch aushärtende Klebstoffzusammensetzung zum Fügen von Komponenten aus Werkstoffen mit unterschiedlichem Längenausdehnungsverhalten zu einem Verbundwerkstück, wobei die Klebstoffzusammensetzung Partikel aus β-nukleierungsmittel-haltigem Polypropylen und/oder aus β-nukleiertem Polypropylen enthält, **dadurch gekennzeichnet, dass** die Zusammensetzung
a) 100 Gewichtsteile eines thermisch und duroplastisch aushärtenden Klebstoffs;
b) 0,1 - 95 Gewichtsteile der Partikel; und
c) 0 - 50 Gewichtsteile Hilfs- und Zusatzstoffe
enthält,
wobei der Klebstoff als Basis Epoxid-Harze (EP) aufweist.

2. Klebstoffzusammensetzung nach Anspruch 1, **dadurch gekennzeichnet, dass** die Partikel β-Polypropylen (β-PP), insbesondere homopolymeres β-Polypropylen (β-PP-H) enthalten.

3. Klebstoffzusammensetzung nach einem der vorhergehenden Ansprüche, **dadurch gekennzeichnet, dass** die Partikel in Form von Plättchen, Granulaten, Pulvern und/oder Fasern in der Zusammensetzung vorliegen.

4. Klebstoffzusammensetzung nach einem der vorhergehenden Ansprüche, **dadurch gekennzeichnet, dass** der Klebstoff inert gegenüber den Partikeln ist.

5. Fügeverfahren zur Herstellung eines Verbundwerkstücks, das Komponenten aus Werkstoffen mit unterschiedlichem Längenausdehnungsverhalten enthält, umfassend die Schritte:
(i) Bereitstellen der zu fügenden Komponenten;
(ii) Auftragen einer Klebstoffzusammensetzung gemäß einem der vorhergehenden Ansprüche auf die vorgegebenen Klebeflächen der zu fügenden Komponenten; und
(iii) Aushärten der Klebstoffzusammensetzung durch Erhitzen, derart, dass die in der Zusammensetzung enthaltenen Partikel aus β-nukleierungsmittel-haltigem Polypropylen und/oder aus β-nukleiertem Polypropylen schmelzen und in einer sich anschließenden Abkühlphase eine separate Phase aus β-Polypropylen bilden.

6. Fügeverfahren nach Anspruch 5, **dadurch gekennzeichnet, dass** im Schritt (iv) das thermische Aushärten eine Haltephase umfasst, bei der eine Temperatur im Bereich von 170 bis 210°C für eine Dauer von 1 bis 60 min aufrecht erhalten wird.

7. Verbundwerkstück, erhältlich über ein Verfahren gemäß Anspruch 5 oder 6.

8. Verbundwerkstück nach Anspruch 7, **dadurch gekennzeichnet, dass** das Verbundwerkstück wenigstens zwei Komponenten aus Werkstoffen mit unterschiedlichem Längenausdehnungsverhalten enthält, wobei die Werkstoffe umfassen:
a) Metalle, insbesondere Aluminium und Stahl;
b) Kunststoffe; und
c) Mischwerkstoffverbunde mit Polymermatrix, insbesondere Faserverbundkunststoffe (FVK).

## Claims

1. A thermally curing adhesive composition for joining components consisting of materials with different longitudinal expansion behaviors to form a composite workpiece, wherein the adhesive composition contains particles of β-nucleating agent-containing polypropylene and/or β-nucleated polypropylene, **characterized in that** the composition contains
a) 100 parts by weight of a thermally curing and thermosetting adhesive;
b) 0.1 - 95 parts by weight of the particles; and
c) 0 - 50 parts by weight of auxiliaries and additives,
wherein the adhesive has epoxy resins (EP) as the basis.

2. The adhesive composition according to claim 1, **characterized in that** the particles contain β-polypropylene (β-PP), in particular homopolymeric β-polypropylene (β-PP-H).

3. The adhesive composition according to any one of the preceding claims, **characterized in that** the particles are in the form of platelets, granules, powders, and/or fibers in the composition.

4. The adhesive composition according to any one of the preceding claims, **characterized in that** the adhesive is inert with respect to the particles.

5. A joining method for producing a composite workpiece containing components consisting of materials with different longitudinal expansion behaviors, comprising the steps of:
(i) providing the components to be joined;
(ii) applying an adhesive composition according to any one of the preceding claims to the predetermined adherends of the components to be joined; and
(iii) curing the adhesive composition by heating, such that the particles of β-nucleating agent-containing polypropylene and/or β-nucleated polypropylene contained in the composition melt and form a separate phase of β-polypropylene in a subsequent cool-down phase.

6. The joining method according to claim 5, **characterized in that,** in step (iv), the thermal curing comprises a holding phase in which a temperature in the range of 170 to 210°C is maintained for a duration of 1 to 60 min.

7. A composite workpiece obtainable via a method according to claim 5 or 6.

8. The composite workpiece according to claim 7, **characterized in that** the composite workpiece contains at least two components consisting of materials with different longitudinal expansion behaviors, wherein the materials comprise:
a) metals, in particular aluminum and steel;
b) plastics; and
c) mixed-material composites with a polymer matrix, in particular fiber-reinforced plastics (FRP).

## Revendications

1. Composition adhésive thermodurcissable destinée à l'assemblage de composants constitués de matières présentant un comportement de dilatation linéaire différent en une pièce composite, ladite composition adhésive contenant des particules de polypropylène contenant un agent de β-nucléation et/ou de polypropylène de β-nucléation, **caractérisée en ce que** ladite composition contient
a) 100 parties en poids d'un adhésif thermodurcissable et thermodurcissable par duroplasticité ;
b) 0,1 à 95 parties en poids des particules ; et
c) 0 à 50 parties en poids d'adjuvants et d'additifs,
l'adhésif comportant en tant que base des résines époxy (EP).

2. Composition adhésive selon la revendication 1, **caractérisée en ce que** les particules contiennent du β-polypropylène (β-PP), en particulier du β-polypropylène homopolymère (β-PP-H).

3. Composition adhésive selon l'une quelconque des revendications précédentes, **caractérisée en ce que** les particules sont présentes dans la composition sous la forme de plaquettes, de granulés, de poudres et/ou de fibres.

4. Composition adhésive selon l'une quelconque des revendications précédentes, **caractérisée en ce que** l'adhésif est inerte par rapport aux particules.

5. Procédé d'assemblage destiné à la fabrication d'une pièce composite, laquelle contient des composants en matières présentant un comportement de dilatation linéaire différent, comprenant les étapes de :
(i) la fourniture des composants à assembler ;
(ii) l'application d'une composition adhésive selon l'une quelconque des revendications précédentes aux surfaces adhésives prédéterminées des composants à assembler ; et
(iii) le durcissement de la composition adhésive par chauffage de telle sorte que les particules de polypropylène contenant un agent de β-nucléation et/ou de polypropylène de β-nucléation contenues dans la composition, fondent et forment, dans une phase de refroidissement ultérieure, une phase séparée de β-polypropylène.

6. Procédé d'assemblage selon la revendication 5, **caractérisé en ce que** dans l'étape (iv) le durcissement thermique comprend une phase de maintien dans laquelle une température dans la plage comprise entre 170 et 210 °C est maintenue pendant une durée de 1 à 60 minutes.

7. Pièce composite pouvant être obtenue à travers un procédé selon la revendication 5 ou 6.

8. Pièce composite selon la revendication 7, **caractérisée en ce que** la pièce composite contient au moins deux composants en matières présentant un comportement de dilatation linéaire différent, les matières comprenant :
a) des métaux, en particulier de l'aluminium et de l'acier ;
b) des matières plastiques ; et
c) des matières composites mixtes présentant une matrice polymère, en particulier des matières plastiques renforcées par des fibres (FRP).
